# EUROPEAN PATENT APPLICATION

(11) **EP 4 694 353 A1**
(43) Date of publication of application: **11.02.2026**
(21) Application number: 24777766.7
(22) Date of filing: 18.03.2024
(51) Int. Cl.: H04W 40/12

(54) **PATH SWITCHING PROCESSING METHOD AND APPARATUS, AND TERMINAL**

(30) Priority: 24.03.2023 CN 202310302406
(71) Applicant: Vivo Mobile Communication Co., Ltd., Dongguan, Guangdong 523863 (CN)
(72) Inventor: WANG, Wen, Dongguan, Guangdong 523863 (CN); JIN, Hui, Dongguan, Guangdong 523863 (CN); XIE, Zhenhua, Dongguan, Guangdong 523863 (CN); ZHANG, Yizhong, Dongguan, Guangdong 523863 (CN)
(74) Representative: Walaski, Jan Filip
(86) International application number: PCT/CN2024/082082
(87) International publication number: WO 2024/198977

(57) **Abstract**

The present application belongs to the technical field of communications and discloses a path switching processing method and apparatus, and a terminal. The method comprises: according to target information, a first terminal initiates a path switching process or executes a path switching process initiated by a second terminal, wherein the target information is used for indicating at least one of the following: timing information of a first switching wait timer of the first terminal; initiator information of the path switching process; a relationship between a sidelink quality value and a first switching threshold, the first switching threshold being a switching threshold dedicated to the first terminal; and a first random number carried in a first path switching request and a second random number carried in a second path switching request, the first path switching request being sent by the first terminal when it is detected that the sidelink quality value is less than or equal to a second switching threshold, and the second path switching request being sent by the second terminal when it is detected that the sidelink quality value is less than or equal to the second switching threshold.

## Description

### CROSS-REFERENCE TO RELATED APPLICATIONS

This application claims priority to Chinese Patent Application No. 202310302406.4, filed on March 24, 2023, which is incorporated herein by reference in its entirety.

### TECHNICAL FIELD

This application pertains to the field of communication technology, and specifically relates to a path switching processing method and apparatus, and a terminal.

### BACKGROUND

In the related art, some services between user equipment (User Equipment, UE) needs to switch from PCS communication to Uu interface communication, so a negotiation procedure for switching from PCS communication to Uu interface communication has been introduced between UEs. Conventionally, one of the trigger conditions for the switch is when a UE detects that the PCS link quality reaches or falls below a configured threshold. As both UEs will detect this threshold, once the threshold is detected, both will initiate the negotiation procedure for switching from PCS communication to Uu interface communication, resulting in a negotiation conflict.

### SUMMARY

Embodiments of this application provide a path switching processing method and apparatus, and a terminal, capable of resolving the conflict issue in the PCS negotiation procedure between UEs.

According to a first aspect, a path switching processing method is provided, including:
based on target information, initiating, by a first terminal, a path switching procedure or executing, by the first terminal, a path switching procedure initiated by a second terminal, where the first terminal and the second terminal communicate via a direct communication interface, the path switching procedure being used to negotiate and/or trigger switching a transmission mode of a target service from transmission via the direct communication interface to transmission via an air interface;
where the target information is used to indicate at least one of the following:
   timing information of a first switching wait timer of the first terminal;
   initiator information of the path switching procedure;
   a relationship between a direct communication link quality value and a first switching threshold, the first switching threshold being a switching threshold dedicated to the first terminal; and
   a first random number carried in a first path switch request and a second random number carried in a second path switch request, the first path switch request being sent by the first terminal upon detecting that the direct communication link quality value is less than or equal to a second switching threshold, and the second path switch request being sent by the second terminal upon detecting that the direct communication link quality value is less than or equal to the second switching threshold.

According to a second aspect, a path switching processing apparatus is provided, including:
a processing module used to, based on target information, initiate a path switching procedure or execute a path switching procedure initiated by a second terminal, where a first terminal and the second terminal communicate via a direct communication interface, the path switching procedure being used to negotiate and/or trigger switching a transmission mode of a target service from transmission via the direct communication interface to transmission via an air interface;
where the target information is used to indicate at least one of the following:
   timing information of a first switching wait timer of the first terminal;
   initiator information of the path switching procedure;
   a relationship between a direct communication link quality value and a first switching threshold, the first switching threshold being a switching threshold dedicated to the first terminal; and
   a first random number carried in a first path switch request and a second random number carried in a second path switch request, the first path switch request being sent by the first terminal upon detecting that the direct communication link quality value is less than or equal to a second switching threshold, and the second path switch request being sent by the second terminal upon detecting that the direct communication link quality value is less than or equal to the second switching threshold.

According to a third aspect, a terminal is provided, the terminal including a processor and a memory, the memory storing a program or instructions executable on the processor, the program or instructions, when executed by the processor, implementing the steps of the method as described in the first aspect.

According to a fourth aspect, a terminal is provided, including a processor and a communication interface, where the processor is used to, based on target information, initiate a path switching procedure or execute a path switching procedure initiated by a second terminal, where a first terminal and the second terminal communicate via a direct communication interface, and the path switching procedure is used to negotiate and/or trigger switching a transmission mode of a target service from transmission via the direct communication interface to transmission via an air interface;
where the target information is used to indicate at least one of the following:
timing information of a first switching wait timer of the first terminal;
initiator information of the path switching procedure;
a relationship between a direct communication link quality value and a first switching threshold, the first switching threshold being a switching threshold dedicated to the first terminal; and
a first random number carried in a first path switch request and a second random number carried in a second path switch request, the first path switch request being sent by the first terminal upon detecting that the direct communication link quality value is less than or equal to a second switching threshold, and the second path switch request being sent by the second terminal upon detecting that the direct communication link quality value is less than or equal to the second switching threshold.

According to a fifth aspect, a readable storage medium is provided, the readable storage medium storing a program or instruction, the program or instruction, when executed by a processor, implementing the steps of the method as described in the first aspect.

According to a sixth aspect, a chip is provided, the chip including a processor and a communication interface, the communication interface being coupled to the processor, the processor being used to execute a program or instruction to implement the method as described in the first aspect.

According to a seventh aspect, a computer program/program product is provided, the computer program/program product being stored in a storage medium, the computer program/program product being executed by at least one processor to implement the steps of the method as described in the first aspect.

According to an eighth aspect, a communication system is provided, the communication system including a first terminal and a second terminal, the first terminal initiating a path switching procedure based on target information, and the second terminal executing the path switching procedure initiated by the first terminal; or the second terminal initiating a path switching procedure based on the target information, and the first terminal executing the path switching procedure initiated by the second terminal.

In embodiments of this application, a first terminal, based on target information, initiates a path switching procedure or executes a path switching procedure initiated by a second terminal. The target information is used to indicate at least one of the following: timing information of a first switching wait timer of the first terminal; initiator information of the path switching procedure; a relationship between a direct communication link quality value and a first switching threshold, the first switching threshold being a switching threshold dedicated to the first terminal; and a first random number carried in a first path switch request and a second random number carried in a second path switch request. Through the above scheme, the first terminal, based on the target information, can determine whether to initiate a path negotiation procedure or execute a path switching procedure initiated by the second terminal, thereby avoiding simultaneous initiation of the path switching procedure by two terminals communicating via a direct communication interface, effectively preventing conflicts in the PCS negotiation procedure between user equipment.

### BRIEF DESCRIPTION OF DRAWINGS

FIG. 1 shows a structural diagram of a communication system applicable to an embodiment of this application.
FIG. 2 shows a flowchart of a path switching processing method according to an embodiment of this application.
FIG. 3 shows a first interaction schematic diagram of a path switching processing method according to an embodiment of this application.
FIG. 4 shows a second interaction schematic diagram of a path switching processing method according to an embodiment of this application.
FIG. 5 shows a third interaction schematic diagram of a path switching processing method according to an embodiment of this application.
FIG. 6 shows a module schematic diagram of a path switching processing apparatus according to an embodiment of this application.
FIG. 7 shows a structural block diagram of a communication device according to an embodiment of this application.
FIG. 8 shows a structural block diagram of a terminal according to an embodiment of this application.

### DESCRIPTION OF EMBODIMENTS

The technical solutions in the embodiments of this application will be clearly described below with reference to the accompanying drawings in the embodiments of this application. Apparently, the described embodiments are a part of the embodiments of this application, not all embodiments. Based on the embodiments in this application, all other embodiments obtained by those skilled in the art fall within the protection scope of this application.

The terms "first", "second", and the like in this application are used to distinguish similar objects, not to describe a specific order or sequence. It should be understood that the terms used in this way are interchangeable under appropriate circumstances, so that the embodiments of this application can be implemented in an order other than those illustrated or described herein, and the objects distinguished by "first", "second", and the like are generally of the same category and do not limit the number of objects; for example, a first object may be one or multiple. In addition, "or" in this application indicates at least one of the connected objects. For example, "A or B" covers three scenarios: scenario one, including A but not B; scenario two, including B but not A; scenario three, including both A and B. The character "/" generally indicates an "or" relationship between the associated objects.

The term "indicate" in this application may be a direct indication (or explicit indication) or an indirect indication (or implicit indication). A direct indication can be understood as the sender explicitly informing the receiver of specific information, operations to be performed, or requested results in the sent indication. An indirect indication can be understood as the receiver determining corresponding information based on the indication sent by the sender, or making a judgment and determining operations to be performed or requested results based on the judgment result.

It is worth noting that the technology described in the embodiments of this application is not limited to long term evolution (Long Term Evolution, LTE)/LTE-advanced (LTE-Advanced, LTE-A) systems but can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of this application are often used interchangeably, and the described technology can be used for the systems and radio technologies mentioned above as well as other systems and radio technologies. The following description describes a new radio (New Radio, NR) system for exemplary purposes, and NR terminology is used in much of the description below, but these technologies can also be applied to systems other than the NR system, such as 6th generation (6th Generation, 6G) communication systems.

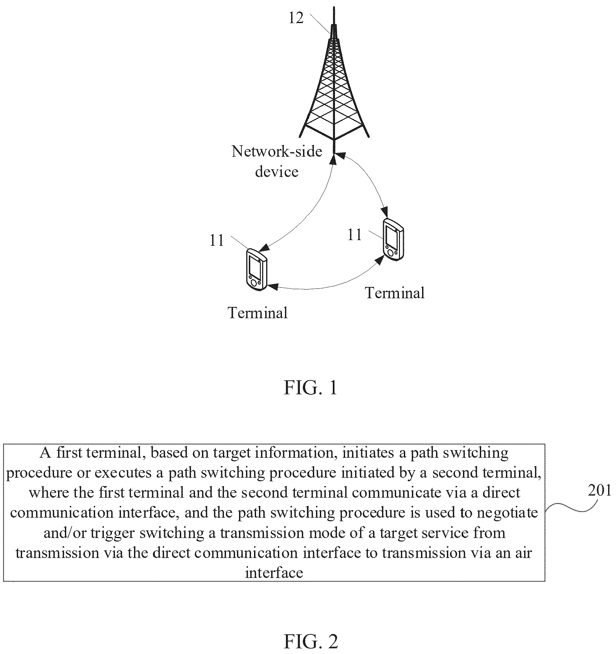

FIG. 1 shows a block diagram of a wireless communication system applicable to an embodiment of this application. The wireless communication system includes a terminal 11 and a network-side device 12. The terminal 11 may be a mobile phone, a tablet personal computer (tablet personal computer), a laptop computer (Laptop Computer), a notebook computer, a personal digital assistant (Personal Digital Assistant, PDA), a palm computer, a netbook, an ultra-mobile personal computer (Ultra-Mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), a shipboard equipment, pedestrian user equipment (Pedestrian User Equipment, PUE), a smart home device (a household device with wireless communication functions, such as a refrigerator, a television, a washing machine, or furniture), a game console, a personal computer (Personal Computer, PC), a teller machine, or a self-service machine, or other terminal-side devices. Wearable devices include smart watches, smart bracelets, smart earphones, smart glasses, smart jewelry (smart bracelets, smart necklaces, smart rings, smart anklets, smart foot chains, and the like), smart wristbands, and smart clothing, and the like. The vehicle user equipment may also be referred to as a vehicle terminal, vehicle controller, vehicle module, vehicle component, vehicle chip, or vehicle unit. It should be noted that the specific type of terminal 11 is not limited in the embodiments of this application. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), or a wireless fidelity (Wireless Fidelity, Wi-Fi) node. The base station may be referred to as a Node B (Node B, NB), an evolved Node B (Evolved Node B, eNB), a next generation Node B (next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission reception point (transmission Reception Point, TRP), or another suitable term in the field, as long as the same technical effect is achieved. The base station is not limited to specific technical terminology. It should be noted that, in the embodiments of this application, only the base station in the NR system is taken as an example for introduction, and the specific type of base station is not limited.

To enable those skilled in the art to better understand the embodiments of this application, the following explanation is provided.

UEs can communicate directly via a PCS interface or communicate with each other via a Uu interface through a network. To maintain the continuity of service communication between UEs, for two UEs communicating via the PCS interface, the PCS interface communication quality may degrade due to certain factors, such as an increased distance between the two UEs, making it impossible to meet the communication requirements of the service, necessitating a switch to Uu interface communication. To enable certain services between UEs to switch to Uu interface communication, a negotiation procedure for switching from PC5 communication to Uu interface communication is introduced between UEs. Currently, one trigger condition for the switch is when a UE detects that the PCS link quality reaches or falls below a configured threshold. Since both UEs monitor this threshold, once the threshold is detected, both initiate the negotiation procedure for switching from PC5 communication to Uu interface communication, resulting in a negotiation conflict issue, further leading to signaling waste and inconsistent understanding of the negotiation procedure between terminals.

In related technologies, signaling conflicts on the PCS link (link) are considered abnormal situations, and the initiating UE abandons its initiated PC5 link management process, starts a timer, and determines to initiate the relevant PCS link management process again after the timer expires. This approach is considered an abnormal situation because the probability of occurrence is low, as the trigger conditions for the current PC5 link management process are independently random for each UE, making it impossible to pre-set mechanisms to intervene in such conflicts. Therefore, the processing mechanism itself is not designed to avoid conflicts in the PCS management process between UEs. Only when a conflict occurs is a subsequent conflict resolution scheme considered, leading to certain signaling waste.

In related technologies, the switching procedure from the PCS communication path to the Uu communication path specifically includes:
1. UE-1 and UE-2 perform direct communication via a PC5 interface.
2. UE-1 sends a path switch request message to UE-2.

Specifically, UE-1 decides to switch proximity services (Proximity Services, ProSe) from the PC5 path to the Uu path, for example, if the PCS signal strength of a unicast link with UE-2 reaches or falls below a configured signal strength threshold.

UE-1 determines, based on a path switching policy, whether and which ProSe can be switched to the Uu path.

UE-1 sends a path switch request message to UE-2 to negotiate the ProSe to be switched. UE-1 includes, in the path switch request message, the ProSe that can be switched to the Uu path.

Optionally, UE-1 may determine Uu quality of service (Quality of Service, QoS) parameters for each UE based on the PC5 QoS parameters of each ProSe. UE-1 may include, in the path switch request message, the Uu QoS parameters of UE-2 for the ProSe service to be switched to the Uu path.

3. UE-2 responds with a path switch response message.

UE-2 determines, based on, for example, a path switching policy and the availability of the Uu path, whether and which ProSe services can be switched to the Uu path.

If UE-2 accepts the path switch request from UE-1, UE-2 includes, in the path switch response message, the ProSe services accepted for switching to the Uu path from the ProSe services indicated by UE-1. Otherwise, UE-2 rejects the path switch request in the path switch response message with an appropriate reason (for example, ProSe services are not allowed to switch to the Uu path, or the Uu path is unavailable).
4a. UE-1 performs establishment or update of a protocol data unit (Protocol Data Unit, PDU) session on the Uu interface.
4b. UE-2 performs establishment or update of a PDU session on the Uu interface.
5. The transmission of ProSe services switches from the PC5 path to the Uu path.
6. UE-1 and UE-2 release the PCS unicast connection.

A path switching processing method provided in the embodiments of this application is described in detail below through some embodiments and their application scenarios with reference to the accompanying drawings.

As shown in FIG. 2, an embodiment of this application provides a path switching processing method, including:
Step 201: A first terminal, based on target information, initiates a path switching procedure or executes a path switching procedure initiated by a second terminal, where the first terminal and the second terminal communicate via a direct communication interface, and the path switching procedure is used to negotiate and/or trigger switching a transmission mode of a target service from transmission via the direct communication interface to transmission via an air interface;
where the target information is used to indicate at least one of the following:
   item 1: timing information of a first switching wait timer of the first terminal;
   item 2: initiator information of the path switching procedure;
   item 3: a relationship between a direct communication link quality value and a first switching threshold, the first switching threshold being a switching threshold dedicated to the first terminal; and
   item 4: a first random number carried in a first path switch request and a second random number carried in a second path switch request, the first path switch request being sent by the first terminal upon detecting that the direct communication link quality value is less than or equal to a second switching threshold, and the second path switch request being sent by the second terminal upon detecting that the direct communication link quality value is less than or equal to the second switching threshold, the second switching threshold being a switching threshold shared by the first terminal and the second terminal.

Optionally, the direct communication interface in the embodiments of this application includes a PC5 interface, and the air interface includes a Uu interface.

In the embodiments of this application, the first terminal initiating a path switching procedure includes the first terminal sending a path switch request message to the second terminal, the path switch request message including identification information of a target service, such as an identifier (Identifier, ID) of the target service, the target service including at least one service. After receiving the path switch request message, the second terminal sends a path switch response message to the first terminal, the path switch response message including identification information of a service in the target service that the first terminal confirms to switch to transmission via the air interface.

In a case that the second terminal initiates a path switching procedure, the second terminal sends a path switch request message to the first terminal, the path switch request message including identification information of a target service, such as an ID of the target service, the target service including at least one service. The first terminal executing the path switching procedure initiated by the second terminal includes the first terminal sending a path switch response message to the second terminal, where the path switch response message includes identification information of a service in the target service that the second terminal confirms to switch to transmission via the air interface.

In the embodiments of this application, the first terminal, based on target information, initiates a path switching procedure or executes a path switching procedure initiated by the second terminal. The target information is used to indicate at least one of the following: timing information of a first switching wait timer of the first terminal; initiator information of the path switching procedure; a relationship between a direct communication link quality value and a first switching threshold, the first switching threshold being a switching threshold dedicated to the first terminal; a first random number carried in a first path switch request and a second random number carried in a second path switch request. Through the above scheme, the first terminal, based on the target information, can determine whether to initiate a path negotiation procedure or execute a path switching procedure initiated by the second terminal, thereby avoiding simultaneous initiation of the path switching procedure by two terminals communicating via a direct communication interface, effectively preventing conflicts in the PCS negotiation procedure between UEs.

Optionally, in a case that the target information is used to indicate the timing information of the first switching wait timer, the method further includes:
starting, by the first terminal, the first switching wait timer.

Optionally, the starting, by the first terminal, the first switching wait timer includes:
starting, by the first terminal, the first switching wait timer upon detecting that the direct communication link quality value is less than or equal to a third switching threshold, where the third switching threshold is a switching threshold shared by the first terminal and the second terminal.

Optionally, a timing value of the first switching wait timer is randomly set by the first terminal (for example, based on UE implementation configuration), configured by a network side, or preconfigured. The first switching wait timer expires when the value of the first switching wait timer reaches the timing value.

It should be noted that, in this application, the expiration of each timer can also be understood as the timer timing out or becoming invalid (expire).

Optionally, in an embodiment of this application, the target information is used to indicate the timing information of the first switching wait timer of the first terminal; and
the based on target information, initiating, by a first terminal, a path switching procedure or executing, by the first terminal, a path switching procedure initiated by a second terminal includes:
initiating the path switching procedure, in a case that the timing information of the first switching wait timer indicates that the first switching wait timer has expired and no path switch request sent by the second terminal has been received; or
executing the path switching procedure initiated by the second terminal, in a case that the timing information of the first switching wait timer indicates that the first switching wait timer has not expired and a path switch request sent by the second terminal has been received, where the path switch request sent by the second terminal is sent in a case that timing information of a second switching wait timer of the second terminal indicates that the second switching wait timer has expired and the second terminal has not received a path switch request sent by the first terminal, where the second switching wait timer is started by the second terminal upon detecting that the direct communication link quality value is less than or equal to a third switching threshold, the third switching threshold being a switching threshold shared by the first terminal and the second terminal.

Optionally, a timing value of the second switching wait timer is randomly set by the second terminal (for example, based on UE implementation configuration), configured by the network side, or preconfigured.

Optionally, the method of the embodiments of this application further includes:
controlling the first switching wait timer to stop timing, in a case that a path switch request sent by the second terminal has been received.

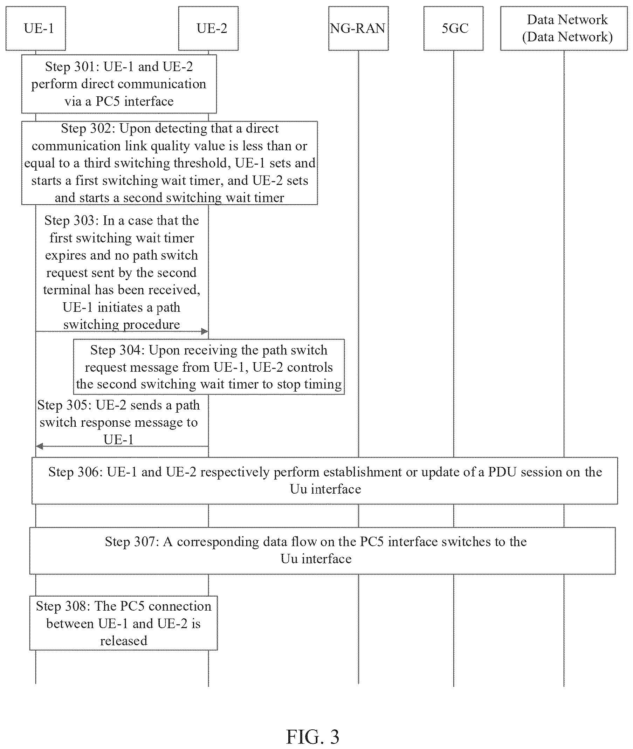

The path switching procedure initiated by the first terminal based on the timing information of the first switching wait timer is described below with reference to FIG. 3. As shown in FIG. 3, the process includes:
Step 301: A first terminal (UE-1) and a second terminal (UE-2) perform direct communication via a PCS interface.
Step 302: Upon detecting that a direct communication link quality value is less than or equal to a third switching threshold, UE-1 sets and starts a first switching wait timer, and UE-2 sets and starts a second switching wait timer.

Optionally, a timing value of the first switching wait timer is different from a timing value of the second switching wait timer.

Step 303: In a case that the first switching wait timer expires and no path switch request sent by the second terminal has been received, UE-1 initiates a path switching procedure.

That is, in a case that the first switching wait timer expires before the second switching wait timer, the first terminal initiates a path switching procedure.

If the second switching wait timer expires before the first switching wait timer, the second terminal initiates a path switching procedure, and the first terminal executes the path switching procedure initiated by the second terminal.

That is, initiating a path switching procedure includes sending a path switch request message, the path switch request message including an ID of a target service, where the target service is a service that UE-1 determines needs to switch to Uu interface communication.

Step 304: Upon receiving the path switch request message from UE-1, UE-2 controls the second switching wait timer to stop timing.

Step 305: UE-2 sends a path switch response message to UE-1, the path switch response message carrying service information of the target service that UE-2 confirms to switch to Uu communication, where the service information may be a service ID.

Step 306: UE-1 and UE-2 respectively perform establishment or update of a PDU session on the Uu interface.

Step 307: A corresponding data flow on the PCS interface is switched to the Uu interface.

Step 308: The PCS connection between UE-1 and UE-2 is released.

In the above process, UE-1 and UE-2 each set a switching wait timer. Upon detecting that a direct communication link quality value is less than or equal to a third switching threshold, UE-1 and UE-2 respectively start the switching wait timers, and the UE whose switching wait timer expires first initiates a path switching procedure, thereby effectively avoiding both UEs initiating a path switching procedure, thus effectively preventing conflicts in the PCS negotiation procedure between UEs.

Optionally, in an embodiment of this application, the target information is used to indicate initiator information of the path switching procedure; and
the based on target information, initiating, by a first terminal, a path switching procedure or executing, by the first terminal, a path switching procedure initiated by a second terminal includes:
initiating the path switching procedure, in a case that the direct communication link quality value is detected to be less than or equal to a fourth switching threshold and the initiator information of the path switching procedure indicates that the first terminal is an initiator of the path switching procedure; or
executing the path switching procedure initiated by the second terminal, in a case that the direct communication link quality value is detected to be less than or equal to the fourth switching threshold and the initiator information of the path switching procedure indicates that the second terminal is an initiator of the path switching procedure;
where the fourth switching threshold is a switching threshold shared by the first terminal and the second terminal.

In the embodiments of this application, the initiator information of the path switching procedure may be determined through negotiation between the first terminal and the second terminal during establishment of a PCS connection.

Optionally, the method of the embodiments of this application further includes:
negotiating, by the first terminal, with the second terminal to determine the initiator information of the path switching procedure.

Optionally, the negotiating, by the first terminal, with the second terminal to determine the initiator information of the path switching procedure includes:
sending, by the first terminal, a first direct communication request to the second terminal, where the first direct communication request carries the initiator information of the path switching procedure, and the initiator information of the path switching procedure is used to indicate that the first terminal or the second terminal is the initiator of the path switching procedure; and receiving, by the first terminal, a first direct communication request accept message sent by the second terminal; where the first direct communication request accept message is used to indicate agreement or acceptance of the initiator information; or
receiving, by the first terminal, a second direct communication request sent by the second terminal, where the second direct communication request carries the initiator information of the path switching procedure and the initiator information of the path switching procedure is used to indicate that the first terminal or the second terminal is the initiator of the path switching procedure; and sending, by the first terminal, a second direct communication request accept message to the second terminal based on the second direct communication request; where the second direct communication request accept message is used to indicate agreement or acceptance of the initiator information.

Optionally, the method of the embodiments of this application further includes:
starting a third switching wait timer, in a case that the initiator information of the path switching procedure indicates that the second terminal is the initiator of the path switching procedure and the direct communication link quality value is detected to be less than or equal to the fourth switching threshold; and
controlling the third switching wait timer to stop timing, in a case that a path switch request sent by the second terminal has been received.

Herein, the third switching wait timer can be used to determine whether the second terminal has a need to initiate a path switching procedure. For example, if the third switching wait timer expires but no path switch request sent by the second terminal has been received, it is considered that the second terminal will not initiate a path switching procedure, that is, the second terminal has no need to switch a service on a PCS link to a Uu link.

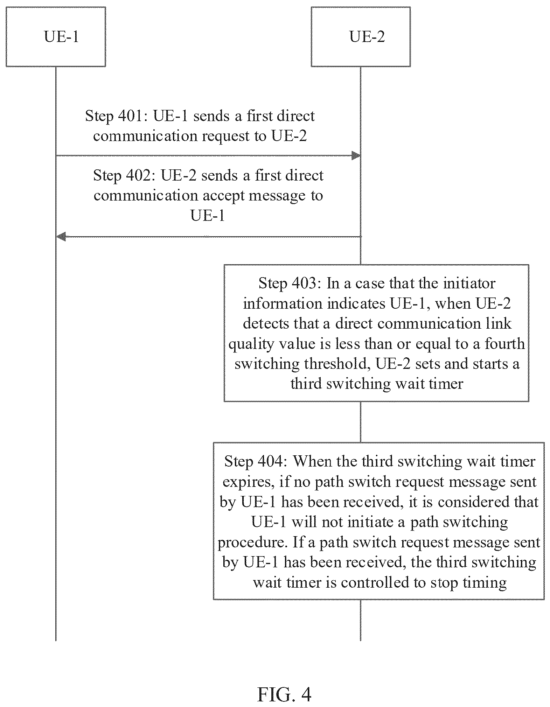

The path switching procedure initiated by the first terminal based on the initiator information of the path switching procedure is described below with reference to FIG. 4. As shown in FIG. 4, the process includes:
Step 401: UE-1 sends a first direct communication request to UE-2.

The first direct communication request carries initiator information of the path switching procedure. Optionally, the first direct communication request carries switching indication information, and the switching indication information indicating the initiator information of the path switching procedure.

Step 402: UE-2 sends a first direct communication accept message to UE-1.

Step 403: In a case that the initiator information indicates UE-1, when UE-2 detects that a direct communication link quality value is less than or equal to a fourth switching threshold, UE-2 sets and starts a third switching wait timer.

Step 404: When the third switching wait timer expires, if no path switch request message sent by UE-1 has been received, it is considered that UE-1 will not initiate a path switching procedure. If a path switch request message sent by UE-1 has been received, the third switching wait timer is controlled to stop timing.

After performing Step 404, Steps 306 to 308 in the embodiment described in FIG. 3 are performed.

In the embodiments of this application, the first terminal and the second terminal pre-negotiate to determine the initiator of a path switching procedure, and in a case that the direct communication link quality value is less than or equal to the fourth switching threshold, the initiator initiates the path switching procedure, thereby effectively avoiding both UEs initiating a path switching procedure, thus effectively preventing conflicts in a PCS negotiation procedure between UEs.

Optionally, in an embodiment of this application, the target information is used to indicate the relationship between the direct communication link quality value and the first switching threshold; and
the based on target information, initiating, by a first terminal, a path switching procedure or executing, by the first terminal, a path switching procedure initiated by a second terminal includes:
initiating the path switching procedure, in a case that the direct communication link quality value is detected to be less than or equal to the first switching threshold and no path switch request sent by the second terminal has been received; or
executing the path switching procedure initiated by the second terminal, in a case that the direct communication link quality value is detected to be greater than the first switching threshold and a path switch request sent by the second terminal has been received, where the path switch request sent by the second terminal is sent in a case that the second terminal detects that the direct communication link quality value is less than or equal to a fifth switching threshold and no path switch request sent by the first terminal has been received, the fifth switching threshold being a path switching threshold dedicated to the second terminal.

Herein, the first switching threshold is different from the fifth switching threshold, and the first switching threshold or the fifth switching threshold may be configured by a RAN or a core network, or may be a value obtained by UE-1 or UE-2 by adjusting a configured switching threshold upward or downward within a permitted range.

In the embodiments of this application, the first terminal and the second terminal correspond to different switching thresholds, and a terminal that first detects that the direct communication link quality value is less than or equal to its corresponding switching threshold initiates a path switching procedure, thereby effectively avoiding both UEs initiating a path switching procedure, thus effectively preventing conflicts in a PCS negotiation procedure between UEs.

Optionally, in an embodiment of this application, the target information is used to indicate a first random number carried in a first path switch request and a second random number carried in a second path switch request;

The based on target information, initiating, by a first terminal, a path switching procedure or executing, by the first terminal, a path switching procedure initiated by a second terminal includes:
initiating a path switching procedure, in a case that the first random number is greater than or equal to the second random number; or executing a path switching procedure initiated by the second terminal, in a case that the first random number is less than the second random number; or
initiating a path switching procedure, in a case that the first random number is less than or equal to the second random number; or executing a path switching procedure initiated by the second terminal, in a case that the first random number is greater than the second random number.

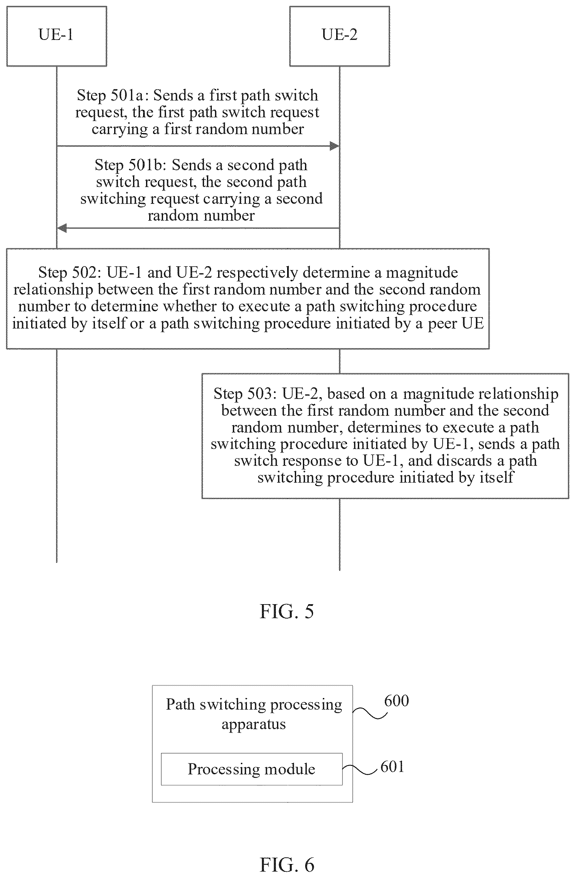

The path switching procedure initiated by the first terminal based on the first random number and the second random number is described below with reference to FIG. 5. As shown in FIG. 5, the process includes:
Step 501a: When UE-1 detects that a direct communication link quality value is less than or equal to a second switching threshold, UE-1 sends a first path switch request, the first path switch request carrying a first random number.
Step 501b: When UE-2 detects that the direct communication link quality value is less than or equal to a second switching threshold, UE-2 sends a second path switch request, the second path switch request carrying a second random number.
Step 502: UE-1 and UE-2 respectively determine a magnitude relationship between the first random number and the second random number to determine whether to execute a path switching procedure initiated by itself or a path switching procedure initiated by a peer UE.
Step 503: UE-2, based on a magnitude relationship between the first random number and the second random number, determines to execute a path switching procedure initiated by UE-1, sends a path switching response to UE-1, and discards the path switching procedure initiated by itself.

For example, if the second random number is greater than the first random number, or the second random number is less than the first random number, UE-2 determines to execute the path switching procedure initiated by UE-1, sends a path switching response to UE-1, and discards the path switching procedure initiated by itself. Optionally, the first random number is different from the second random number.

In the embodiments of this application, a UE carries a random number in a path switch request, and based on a random number set by itself and a random number received from a peer UE, determines whether to execute a path switching procedure initiated by the peer UE or a path switching procedure initiated by itself, effectively avoiding conflicts in a PC5 negotiation procedure between UEs.

Optionally, after the first terminal initiates the path switching procedure based on target information, the method further includes:
in a case that a path switch request sent by the second terminal has been received, performing at least one of the following:
stopping the path switching procedure; and
starting a fourth switching wait timer, where, after the fourth switching wait timer expires, the first terminal reinitiates the path switching procedure. In the embodiments of this application, a first terminal, based on target information, initiates a path switching procedure or executes a path switching procedure initiated by a second terminal. The target information is used to indicate at least one of the following: timing information of a first switching wait timer of the first terminal; initiator information of the path switching procedure; a relationship between a direct communication link quality value and a first switching threshold, the first switching threshold being a switching threshold dedicated to the first terminal; and a first random number carried in a first path switch request and a second random number carried in a second path switch request. Through the above scheme, the first terminal, based on the target information, can determine whether to initiate a path negotiation procedure or execute a path switching procedure initiated by the second terminal, thereby avoiding simultaneous initiation of a path switching procedure by two terminals communicating via a direct communication interface, effectively preventing conflicts in a PC5 negotiation procedure between UEs.

The path switching processing method provided in the embodiments of this application may be executed by a path switching processing apparatus. In the embodiments of this application, the path switching processing apparatus executing the path switching processing method is taken as an example to describe the path switching processing apparatus provided in the embodiments of this application.

As shown in FIG. 6, an embodiment of this application provides a path switching processing apparatus 600, including:
a processing module 601 configured to, based on target information, initiate a path switching procedure or execute a path switching procedure initiated by a second terminal, where a first terminal and the second terminal communicate via a direct communication interface, the path switching procedure being used to negotiate and/or trigger switching a transmission mode of a target service from transmission via the direct communication interface to transmission via an air interface;
where the target information is used to indicate at least one of the following:
   timing information of a first switching wait timer of the first terminal;
   initiator information of the path switching procedure;
   a relationship between a direct communication link quality value and a first switching threshold, the first switching threshold being a switching threshold dedicated to the first terminal; and
   a first random number carried in a first path switch request and a second random number carried in a second path switch request, the first path switch request being sent by the first terminal upon detecting that the direct communication link quality value is less than or equal to a second switching threshold, and the second path switch request being sent by the second terminal upon detecting that the direct communication link quality value is less than or equal to the second switching threshold.

Optionally, in a case that the target information is used to indicate the timing information of the first switching wait timer, the apparatus further includes:
a first starting module configured to start the first switching wait timer. Optionally, the first starting module is configured to start the first switching wait timer upon detecting that the direct communication link quality value is less than or equal to a third switching threshold, the third switching threshold being a switching threshold shared by the first terminal and the second terminal.

Optionally, in a case that the target information is used to indicate the timing information of the first switching wait timer, the apparatus further includes:
the first starting module configured to start the first switching wait timer upon detecting that the direct communication link quality value is less than or equal to a third switching threshold, the third switching threshold being a switching threshold shared by the first terminal and the second terminal.

Optionally, a timing value of the first switching wait timer is randomly set by the first terminal, or configured by a network side, or preconfigured.

Optionally, the target information is used to indicate timing information of a first switching wait timer of the first terminal; the processing module is configured to, in a case that the timing information of the first switching wait timer indicates that the first switching wait timer has expired and no path switch request sent by the second terminal has been received, initiate the path switching procedure; or
in a case that the timing information of the first switching wait timer indicates that the first switching wait timer has not expired and a path switch request sent by the second terminal has been received, execute the path switching procedure initiated by the second terminal, the path switch request sent by the second terminal being sent in a case that timing information of a second switching wait timer of the second terminal indicates that the second switching wait timer has expired and the second terminal has not received a path switch request sent by the first terminal, where the second switching wait timer is started by the second terminal upon detecting that the direct communication link quality value is less than or equal to a third switching threshold, the third switching threshold being a switching threshold shared by the first terminal and the second terminal.

Optionally, the apparatus of the embodiments of this application further includes:
a first control module configured to, in a case that a path switch request sent by the second terminal has been received, control the first switching wait timer to stop timing.

Optionally, the target information is used to indicate the initiator information of the path switching procedure; and
the processing module is configured to, in a case that the direct communication link quality value is detected to be less than or equal to a fourth switching threshold and the initiator information of the path switching procedure indicates that the first terminal is an initiator of the path switching procedure, initiate the path switching procedure; or
in a case that the direct communication link quality value is detected to be less than or equal to the fourth switching threshold and the initiator information of the path switching procedure indicates that the second terminal is the initiator of the path switching procedure, execute the path switching procedure initiated by the second terminal;
where the fourth switching threshold is a switching threshold shared by the first terminal and the second terminal.

Optionally, the apparatus of the embodiments of this application further includes:
a negotiation module configured to negotiate with the second terminal to determine the initiator information of the path switching procedure.

Optionally, the negotiation module is configured to send a first direct communication request to the second terminal, the first direct communication request carrying the initiator information of the path switching procedure and the initiator information of the path switching procedure indicating that the first terminal or the second terminal is the initiator of the path switching procedure; and receive a first direct communication request accept message sent by the second terminal; or
receive a second direct communication request sent by the second terminal, the second direct communication request carrying the initiator information of the path switching procedure and the initiator information of the path switching procedure indicating that the first terminal or the second terminal is the initiator of the path switching procedure, and send a second direct communication request accept message to the second terminal based on the second direct communication request.

Optionally, the apparatus of the embodiments of this application further includes:
a second starting module configured to, in a case that the initiator information of the path switching procedure indicates that the second terminal is the initiator of the path switching procedure and the direct communication link quality value is detected to be less than or equal to the fourth switching threshold, start a third switching wait timer; and
a second control module configured to, in a case that a path switch request sent by the second terminal has been received, control the third switching wait timer to stop timing.

Optionally, the target information is used to indicate the relationship between the direct communication link quality value and the first switching threshold; where
the processing module is configured to, in a case that the direct communication link quality value is detected to be less than or equal to the first switching threshold and no path switch request sent by the second terminal has been received, initiate the path switching procedure; or
in a case that the direct communication link quality value is detected to be greater than the first switching threshold and a path switch request sent by the second terminal has been received, execute the path switching procedure initiated by the second terminal, where the path switch request sent by the second terminal is sent in a case that the second terminal detects that the direct communication link quality value is less than or equal to a fifth switching threshold and no path switch request sent by the first terminal has been received, the fifth switching threshold being a path switching threshold dedicated to the second terminal.

Optionally, the target information is used to indicate the first random number carried in the first path switch request and the second random number carried in the second path switch request; where
the processing module is configured to, in a case that the first random number is greater than or equal to the second random number, initiate the path switching procedure; or in a case that the first random number is less than the second random number, execute the path switching procedure initiated by the second terminal; or
in a case that the first random number is less than or equal to the second random number, initiate the path switching procedure; or in a case that the first random number is greater than the second random number, execute the path switching procedure initiated by the second terminal.

Optionally, the apparatus of the embodiments of this application further includes:
an execution module configured to, after the processing module initiates the path switching procedure based on the target information and in a case that a path switch request sent by the second terminal has been received, perform at least one of the following:
stopping the path switching procedure; and
starting a fourth switching wait timer, where, after the fourth switching wait timer expires, the first terminal reinitiates the path switching procedure.

The apparatus of the embodiments of this application, based on target information, initiates a path switching procedure or executes a path switching procedure initiated by a second terminal. The target information is used to indicate at least one of the following: timing information of a first switching wait timer of the first terminal; initiator information of the path switching procedure; a relationship between a direct communication link quality value and a first switching threshold, the first switching threshold being a switching threshold dedicated to the first terminal; a first random number carried in a first path switch request and a second random number carried in a second path switch request. Through the above scheme, the first terminal, based on the target information, can determine whether to initiate a path negotiation procedure or execute a path switching procedure initiated by the second terminal, thereby avoiding simultaneous initiation of a path switching procedure by two terminals communicating via a direct communication interface, effectively preventing conflicts in a PC5 negotiation procedure between UEs.

The path switching processing apparatus in the embodiments of this application may be an electronic device, such as an electronic device with an operating system, or a component in an electronic device, such as an integrated circuit or chip. The electronic device may be a terminal or a device other than a terminal. For example, the terminal may include, but is not limited to, the types of terminal 11 listed above, and other devices may be a server, a network attached storage (Network Attached Storage, NAS), or the like, which are not specifically limited in the embodiments of this application.

The path switching processing apparatus provided in the embodiments of this application can implement the processes implemented by the method embodiments of FIG. 2 to FIG. 5 and achieve the same technical effects. To avoid repetition, details are not described herein again.

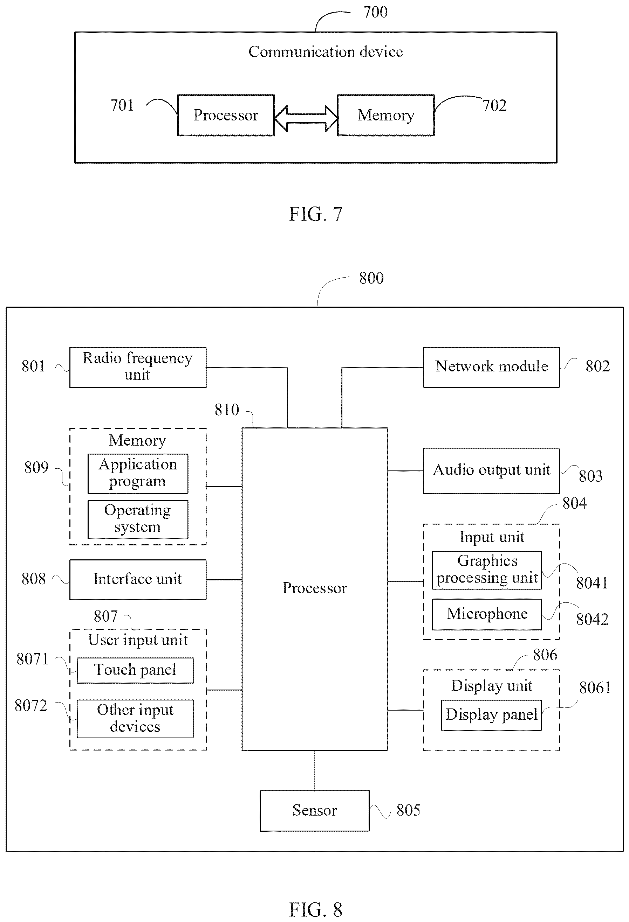

Optionally, as shown in FIG. 7, an embodiment of this application further provides a communication device 700, including a processor 701 and a memory 702, the memory 702 storing a program or instruction executable on the processor 701. For example, when the communication device 700 is a terminal, the program or instruction, when executed by the processor 701, implement the steps of the path switching processing method embodiment described above and can achieve the same technical effects. To avoid repetition, details are not described herein again.

An embodiment of this application further provides a terminal, including a processor and a communication interface, the processor being configured to, based on target information, initiate a path switching procedure or execute a path switching procedure initiated by a second terminal, where a first terminal and the second terminal communicate via a direct communication interface, and the path switching procedure is used to negotiate and/or trigger switching a transmission mode of a target service from transmission via the direct communication interface to transmission via an air interface;
where the target information is used to indicate at least one of the following:
timing information of a first switching wait timer of the first terminal;
initiator information of the path switching procedure;
a relationship between a direct communication link quality value and a first switching threshold, the first switching threshold being a switching threshold dedicated to the first terminal; and
a first random number carried in a first path switch request and a second random number carried in a second path switch request, the first path switch request being sent by the first terminal upon detecting that a direct communication link quality value is less than or equal to a second switching threshold, and the second path switch request being sent by the second terminal upon detecting that the direct communication link quality value is less than or equal to a second switching threshold. This terminal embodiment corresponds to the terminal-side method embodiment described above, and all implementation processes and implementation manners of the method embodiment described above are applicable to this terminal embodiment and can achieve the same technical effects. Specifically, FIG. 8 shows a schematic diagram of a hardware structure of a terminal implementing an embodiment of this application.

The terminal 800 includes, but is not limited to, at least some of the following components: a radio frequency unit 801, a network module 802, an audio output unit 803, an input unit 804, a sensor 805, a display unit 806, a user input unit 807, an interface unit 808, a memory 809, and a processor 810.

Those skilled in the art can understand that the terminal 800 may further include a power source (such as a battery) supplying power to the components, and the power source may be logically connected to the processor 810 through a power management system, thereby implementing functions such as managing charging, discharging, and power consumption through the power management system. The terminal structure shown in FIG. 8 does not constitute a limitation on the terminal, and the terminal may include more or fewer components than shown, or combine certain components, or have a different component arrangement, which is not described in detail here.

It should be understood that, in the embodiments of this application, the input unit 804 may include a graphics processing unit (Graphics Processing Unit, GPU) 8041 and a microphone 8042, the graphics processing unit 8041 processing image data of still pictures or videos obtained by an image capture device (such as a camera) in a video capture mode or an image capture mode. The display unit 806 may include a display panel 8061, which may be configured in the form of a liquid crystal display, an organic light-emitting diode, or the like. The user input unit 807 includes at least one of a touch panel 8071 and other input devices 8072. The touch panel 8071 is also referred to as a touchscreen. The touch panel 8071 may include two parts: a touch detection device and a touch controller. Other input devices 8072 may include, but are not limited to, a physical keyboard, function keys (such as volume control keys, switch keys, and the like), a trackball, a mouse, and a joystick, which are not described in detail here.

In the embodiments of this application, after receiving downlink data from a network-side device, the radio frequency unit 801 may transmit the data to the processor 810 for processing; in addition, the radio frequency unit 801 may send uplink data to the network-side device. Typically, the radio frequency unit 801 includes, but is not limited to, an antenna, an amplifier, a transceiver, a coupler, a low noise amplifier, a duplexer, and the like.

The memory 809 may be configured to store software programs or instructions and various data. The memory 809 may mainly include a first storage area storing programs or instructions and a second storage area storing data, where the first storage area may store an operating system, an application program or instruction required for at least one function (such as a sound playback function and an image playback function,), and the like. In addition, the memory 809 may include a volatile memory or a non-volatile memory. The non-volatile memory may be a read-only memory (Read-Only Memory, ROM), a programmable ROM (Programmable ROM, PROM), an erasable PROM (Erasable PROM, EPROM), an electrically erasable PROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), or a direct Rambus RAM (Direct Rambus RAM, DRRAM). The memory 809 in the embodiments of this application includes, but is not limited to, these and any other suitable types of memory.

The processor 810 may include one or more processing units; optionally, the processor 810 integrates an application processor and a modem processor, where the application processor mainly handles operations related to an operating system, a user interface, and an application program, and the modem processor mainly handles wireless communication signals, such as a baseband processor. It can be understood that the modem processor may not be integrated into the processor 810.

The processor 810 is configured to, based on target information, initiate a path switching procedure or execute a path switching procedure initiated by a second terminal, where a first terminal and the second terminal communicate via a direct communication interface, and the path switching procedure is used to negotiate and/or trigger switching a transmission mode of a target service from transmission via the direct communication interface to transmission via an air interface;
where the target information is used to indicate at least one of the following:
timing information of a first switching wait timer of the first terminal;
initiator information of the path switching procedure;
a relationship between a direct communication link quality value and a first switching threshold, the first switching threshold being a switching threshold dedicated to the first terminal; and
a first random number carried in a first path switch request and a second random number carried in a second path switch request, the first path switch request being sent by the first terminal upon detecting that the direct communication link quality value is less than or equal to a second switching threshold, and the second path switch request being sent by the second terminal upon detecting that the direct communication link quality value is less than or equal to the second switching threshold.

Optionally, the processor 810 is further configured to, in a case that the target information is used to indicate the timing information of the first switching wait timer, start the first switching wait timer.

Optionally, the processor 810 is further configured to, in a case that the direct communication link quality value is detected to be less than or equal to a third switching threshold, start the first switching wait timer, the third switching threshold being a switching threshold shared by the first terminal and the second terminal.

Optionally, a timing value of the first switching wait timer is randomly set by the first terminal, configured by a network side, or preconfigured.

Optionally, the target information is used to indicate the timing information of the first switching wait timer of the first terminal;
the processor 810 is further configured to, in a case that the timing information of the first switching wait timer indicates that the first switching wait timer has expired and no path switch request sent by the second terminal has been received, initiate the path switching procedure; or
in a case that the timing information of the first switching wait timer indicates that the first switching wait timer has not expired and a path switch request sent by the second terminal has been received, execute the path switching procedure initiated by the second terminal, where the path switch request sent by the second terminal is sent in a case that timing information of a second switching wait timer of the second terminal indicates that the second switching wait timer has expired and the second terminal has not received a path switch request sent by the first terminal, where the second switching wait timer is started by the second terminal upon detecting that the direct communication link quality value is less than or equal to a third switching threshold, the third switching threshold being a switching threshold shared by the first terminal and the second terminal.

Optionally, the processor 810 is further configured to, in a case that a path switch request sent by the second terminal has been received, control the first switching wait timer to stop timing.

Optionally, the target information is used to indicate the initiator information of the path switching procedure;
the processor 810 is further configured to, in a case that the direct communication link quality value is detected to be less than or equal to a fourth switching threshold and initiator information of the path switching procedure indicates that the first terminal is an initiator of the path switching procedure, initiate the path switching procedure; or
in a case that the direct communication link quality value is detected to be less than or equal to the fourth switching threshold and the initiator information of the path switching procedure indicates that the second terminal is the initiator of the path switching procedure, execute the path switching procedure initiated by the second terminal;
where the fourth switching threshold is a switching threshold shared by the first terminal and the second terminal.

Optionally, the processor 810 is further configured to negotiate with the second terminal to determine the initiator information of the path switching procedure.

Optionally, the processor 810 is further configured to send a first direct communication request to the second terminal, the first direct communication request carrying the initiator information of the path switching procedure and the initiator information of the path switching procedure indicating that the first terminal or the second terminal is the initiator of the path switching procedure; and receive a first direct communication request accept message sent by the second terminal; or
receive a second direct communication request sent by the second terminal, the second direct communication request carrying the initiator information of the path switching procedure and the initiator information of the path switching procedure indicating that the first terminal or the second terminal is the initiator of the path switching procedure, and send a second direct communication request accept message to the second terminal based on the second direct communication request.

Optionally, the processor 810 is further configured to, in a case that the initiator information of the path switching procedure indicates that the second terminal is the initiator of the path switching procedure and the direct communication link quality value is detected to be less than or equal to the fourth switching threshold, start a third switching wait timer; and in a case that a path switch request sent by the second terminal has been received, control the third switching wait timer to stop timing.

Optionally, the target information is used to indicate the relationship between the direct communication link quality value and the first switching threshold; where
the processor 810 is further configured to, in a case that the direct communication link quality value is detected to be less than or equal to the first switching threshold and no path switch request sent by the second terminal has been received, initiate the path switching procedure; or
in a case that the direct communication link quality value is detected to be greater than the first switching threshold and a path switch request sent by the second terminal has been received, execute the path switching procedure initiated by the second terminal, where the path switch request sent by the second terminal is sent in a case that the second terminal detects that the direct communication link quality value is less than or equal to a fifth switching threshold and no path switch request sent by the first terminal has been received, the fifth switching threshold being a path switching threshold dedicated to the second terminal.

Optionally, the target information is used to indicate the first random number carried in the first path switch request and the second random number carried in the second path switch request; where
the processor 810 is further configured to, in a case that the first random number is greater than or equal to the second random number, initiate the path switching procedure; or in a case that the first random number is less than the second random number, execute the path switching procedure initiated by the second terminal; or
in a case that the first random number is less than or equal to the second random number, initiate the path switching procedure; or in a case that the first random number is greater than the second random number, execute the path switching procedure initiated by the second terminal.

Optionally, the processor 810 is further configured to, in a case that a path switch request sent by the second terminal has been received, perform at least one of the following:
stopping the path switching procedure; and
starting a fourth switching wait timer, where, after the fourth switching wait timer expires, the first terminal reinitiates the path switching procedure.

In the embodiments of this application, a first terminal, based on target information, initiates a path switching procedure or executes a path switching procedure initiated by a second terminal. The target information is used to indicate at least one of the following: timing information of a first switching wait timer of the first terminal; initiator information of the path switching procedure; a relationship between a direct communication link quality value and a first switching threshold, the first switching threshold being a switching threshold dedicated to the first terminal; a first random number carried in a first path switch request and a second random number carried in a second path switch request. Through the above scheme, the first terminal, based on the target information, can determine whether to initiate a path negotiation procedure or execute a path switching procedure initiated by the second terminal, thereby avoiding simultaneous initiation of a path switching procedure by two terminals communicating via a direct communication interface, effectively preventing conflicts in a PC5 negotiation procedure between UEs.

An embodiment of this application further provides a readable storage medium, the readable storage medium storing a program or instruction, the program or instruction, when executed by a processor, implementing the processes of the path switching processing method embodiment described above and achieving the same technical effects. To avoid repetition, details are not described herein again.

The processor is the processor in the terminal described in the above embodiment. The readable storage medium includes a computer-readable storage medium, such as a computer read-only memory ROM, a random access memory RAM, a magnetic disk, or an optical disk. In some examples, the readable storage medium may be a non-transitory readable storage medium.

An embodiment of this application further provides a chip, the chip including a processor and a communication interface, the communication interface being coupled to the processor, the processor being configured to execute a program or instruction to implement the processes of the path switching processing method embodiment described above and achieve the same technical effects. To avoid repetition, details are not described herein again.

It should be understood that the chip mentioned in the embodiments of this application may also be referred to as a system-level chip, a system chip, a chip system, or a system-on-chip.

An embodiment of this application further provides a computer program/program product, the computer program/program product being stored in a storage medium, the computer program/program product being executed by at least one processor to implement the processes of the path switching processing method embodiment described above and achieve the same technical effects. To avoid repetition, details are not described herein again.

An embodiment of this application further provides a communication system, the communication system including a first terminal and a second terminal, the first terminal initiating a path switching procedure based on target information, and the second terminal executing the path switching procedure initiated by the first terminal; or the second terminal initiating a path switching procedure based on target information, and the first terminal executing the path switching procedure initiated by the second terminal.

It should be noted that, in this document, the terms "include", "comprise", or any other variants thereof are intended to cover non-exclusive inclusion, such that a process, method, article, or apparatus including a series of elements includes not only those elements but also other elements not explicitly listed, or elements inherent to such a process, method, article, or apparatus. In the absence of further restrictions, an element defined by the statement "including a..." does not exclude the presence of other identical elements in the process, method, article, or apparatus including the element. In addition, it should be pointed out that the scope of the methods and apparatuses in the embodiments of this application is not limited to performing functions in the order shown or discussed, but may also include performing functions in a substantially simultaneous manner or in a reverse order according to the functions involved. For example, the described methods may be performed in an order different from that described, and various steps may be added, omitted, or combined. In addition, features described with reference to certain examples may be combined in other examples.

Through the description of the above embodiments, those skilled in the art can clearly understand that the above embodiment methods can be implemented by means of a computer software product plus a necessary general hardware platform, and of course, can also be implemented by hardware. The computer software product is stored in a storage medium (such as ROM, RAM, magnetic disk, optical disk, and the like) and includes several instructions to enable a terminal or network-side device to execute the methods described in the embodiments of this application.

The embodiments of this application have been described above with reference to the accompanying drawings, but This application is not limited to the specific embodiments described above. The specific embodiments described above are merely illustrative and not restrictive. Those skilled in the art, under the inspiration of this application, can make many forms of embodiments without departing from the purpose of this application and the scope protected by the claims, and these embodiments all fall within the protection of this application.

## Claims

1. A path switching processing method comprising:
based on target information, initiating, by a first terminal, a path switching procedure or executing, by the first terminal, a path switching procedure initiated by a second terminal, wherein the first terminal and the second terminal communicate via a direct communication interface, the path switching procedure being used to negotiate and/or trigger switching a transmission mode of a target service from transmission via the direct communication interface to transmission via an air interface;
wherein the target information is used to indicate at least one of the following:
timing information of a first switching wait timer of the first terminal;
initiator information of the path switching procedure;
a relationship between a direct communication link quality value and a first switching threshold, the first switching threshold being a switching threshold dedicated to the first terminal; and
a first random number carried in a first path switch request and a second random number carried in a second path switch request, the first path switch request being sent by the first terminal upon detecting that the direct communication link quality value is less than or equal to a second switching threshold, and the second path switch request being sent by the second terminal upon detecting that the direct communication link quality value is less than or equal to the second switching threshold.

2. The method according to claim 1, wherein, in a case that the target information is used to indicate the timing information of the first switching wait timer, the method further comprises:
starting, by the first terminal, the first switching wait timer.

3. The method according to claim 2, wherein the starting, by the first terminal, the first switching wait timer comprises:
starting, by the first terminal, the first switching wait timer upon detecting that the direct communication link quality value is less than or equal to a third switching threshold, wherein the third switching threshold is a switching threshold shared by the first terminal and the second terminal.

4. The method according to claim 3, wherein a timing value of the first switching wait timer is randomly set by the first terminal, configured by a network side, or preconfigured.

5. The method according to any one of claims 1 to 4, wherein the target information is used to indicate the timing information of the first switching wait timer of the first terminal; and
the based on target information, initiating, by a first terminal, a path switching procedure or executing, by the first terminal, a path switching procedure initiated by a second terminal comprises:
initiating the path switching procedure, in a case that the timing information of the first switching wait timer indicates that the first switching wait timer has expired and no path switch request sent by the second terminal has been received; or
executing the path switching procedure initiated by the second terminal, in a case that the timing information of the first switching wait timer indicates that the first switching wait timer has not expired and a path switch request sent by the second terminal has been received, wherein the path switch request sent by the second terminal is sent in a case that timing information of a second switching wait timer of the second terminal indicates that the second switching wait timer has expired and the second terminal has not received a path switch request sent by the first terminal, wherein the second switching wait timer is started by the second terminal upon detecting that the direct communication link quality value is less than or equal to a third switching threshold, the third switching threshold being a switching threshold shared by the first terminal and the second terminal.

6. The method according to claim 2, further comprising:
controlling the first switching wait timer to stop timing, in a case that a path switch request sent by the second terminal has been received.

7. The method according to claim 1, wherein the target information is used to indicate the initiator information of the path switching procedure; and
the based on target information, initiating, by a first terminal, a path switching procedure or executing, by the first terminal, a path switching procedure initiated by a second terminal comprises:
initiating the path switching procedure, in a case that the direct communication link quality value is detected to be less than or equal to a fourth switching threshold and the initiator information of the path switching procedure indicates that the first terminal is an initiator of the path switching procedure; or
executing the path switching procedure initiated by the second terminal, in a case that the direct communication link quality value is detected to be less than or equal to the fourth switching threshold and the initiator information of the path switching procedure indicates that the second terminal is the initiator of the path switching procedure;
wherein the fourth switching threshold is a switching threshold shared by the first terminal and the second terminal.

8. The method according to claim 7, further comprising:
negotiating, by the first terminal, with the second terminal to determine the initiator information of the path switching procedure.

9. The method according to claim 8, wherein the negotiating, by the first terminal, with the second terminal to determine the initiator information of the path switching procedure comprises:
sending, by the first terminal, a first direct communication request to the second terminal, wherein the first direct communication request carries the initiator information of the path switching procedure, and the initiator information of the path switching procedure is used to indicate that the first terminal or the second terminal is the initiator of the path switching procedure; and receiving, by the first terminal, a first direct communication request accept message sent by the second terminal; or
receiving, by the first terminal, a second direct communication request sent by the second terminal, wherein the second direct communication request carries the initiator information of the path switching procedure, and the initiator information of the path switching procedure is used to indicate that the first terminal or the second terminal is the initiator of the path switching procedure; and sending, by the first terminal, a second direct communication request accept message to the second terminal based on the second direct communication request.

10. The method according to any one of claims 7 to 9, further comprising:
starting a third switching wait timer, in a case that the initiator information of the path switching procedure indicates that the second terminal is the initiator of the path switching procedure and the direct communication link quality value is detected to be less than or equal to the fourth switching threshold; and
controlling the third switching wait timer to stop timing, in a case that a path switch request sent by the second terminal has been received.

11. The method according to claim 1, wherein the target information is used to indicate the relationship between the direct communication link quality value and the first switching threshold; and
the based on target information, initiating, by a first terminal, a path switching procedure or executing, by the first terminal, a path switching procedure initiated by a second terminal comprises:
initiating the path switching procedure, in a case that the direct communication link quality value is detected to be less than or equal to the first switching threshold and no path switch request sent by the second terminal has been received; or
executing the path switching procedure initiated by the second terminal, in a case that the direct communication link quality value is detected to be greater than the first switching threshold and a path switch request sent by the second terminal has been received, wherein the path switch request sent by the second terminal is sent in a case that the second terminal detects that the direct communication link quality value is less than or equal to a fifth switching threshold and no path switch request sent by the first terminal has been received, the fifth switching threshold being a path switching threshold dedicated to the second terminal.

12. The method according to claim 1, wherein, after the based on target information, initiating, by a first terminal, a path switching procedure, the method further comprises:
in a case that a path switch request sent by the second terminal has been received, performing at least one of the following:
stopping the path switching procedure; and
starting a fourth switching wait timer, wherein, after the fourth switching wait timer expires, the first terminal reinitiates the path switching procedure.

13. The method according to claim 1, wherein the target information is used to indicate the first random number carried in the first path switch request and the second random number carried in the second path switch request; and
the based on target information, initiating, by a first terminal, a path switching procedure or executing, by the first terminal, a path switching procedure initiated by a second terminal comprises:
initiating the path switching procedure, in a case that the first random number is greater than or equal to the second random number; or executing the path switching procedure initiated by the second terminal, in a case that the first random number is less than the second random number; or
initiating the path switching procedure, in a case that the first random number is less than or equal to the second random number; or executing the path switching procedure initiated by the second terminal, in a case that the first random number is greater than the second random number.

14. A path switching processing apparatus comprising:
a processing module configured to, based on target information, initiate a path switching procedure or execute a path switching procedure initiated by a second terminal, wherein a first terminal and the second terminal communicate via a direct communication interface, the path switching procedure being used to negotiate and/or trigger switching a transmission mode of a target service from transmission via the direct communication interface to transmission via an air interface;
wherein the target information is used to indicate at least one of the following:
timing information of a first switching wait timer of the first terminal;
initiator information of the path switching procedure;
a relationship between a direct communication link quality value and a first switching threshold, the first switching threshold being a switching threshold dedicated to the first terminal; and
a first random number carried in a first path switch request and a second random number carried in a second path switch request, the first path switch request being sent by the first terminal upon detecting that the direct communication link quality value is less than or equal to a second switching threshold, and the second path switch request being sent by the second terminal upon detecting that the direct communication link quality value is less than or equal to the second switching threshold.

15. The apparatus according to claim 14, wherein, in a case that the target information is used to indicate the timing information of the first switching wait timer, the apparatus further comprises:
a first starting module configured to start the first switching wait timer.

16. The apparatus according to claim 15, wherein the first starting module is configured to start the first switching wait timer upon detecting that the direct communication link quality value is less than or equal to a third switching threshold, the third switching threshold being a switching threshold shared by the first terminal and the second terminal.

17. The apparatus according to claim 16, wherein a timing value of the first switching wait timer is randomly set by the first terminal, configured by a network side, or preconfigured.

18. The apparatus according to any one of claims 14 to 17, wherein the target information is used to indicate the timing information of the first switching wait timer of the first terminal; and
the processing module is configured to, in a case that the timing information of the first switching wait timer indicates that the first switching wait timer has expired and no path switch request sent by the second terminal has been received, initiate the path switching procedure; or
in a case that the timing information of the first switching wait timer indicates that the first switching wait timer has not expired and a path switch request sent by the second terminal has been received, execute the path switching procedure initiated by the second terminal, the path switch request sent by the second terminal being sent in a case that timing information of a second switching wait timer of the second terminal indicates that the second switching wait timer has expired and the second terminal has not received a path switch request sent by the first terminal, wherein the second switching wait timer is started by the second terminal upon detecting that the direct communication link quality value is less than or equal to a third switching threshold, the third switching threshold being a switching threshold shared by the first terminal and the second terminal.

19. The apparatus according to claim 15, further comprising:
a first control module configured to, in a case that a path switch request sent by the second terminal has been received, control the first switching wait timer to stop timing.

20. The apparatus according to claim 14, wherein the target information is used to indicate the initiator information of the path switching procedure; and
the processing module is configured to, in a case that the direct communication link quality value is detected to be less than or equal to a fourth switching threshold and the initiator information of the path switching procedure indicates that the first terminal is an initiator of the path switching procedure, initiate the path switching procedure; or
in a case that the direct communication link quality value is detected to be less than or equal to the fourth switching threshold and the initiator information of the path switching procedure indicates that the second terminal is the initiator of the path switching procedure, execute the path switching procedure initiated by the second terminal;
wherein the fourth switching threshold is a switching threshold shared by the first terminal and the second terminal.

21. The apparatus according to claim 20, further comprising:
a negotiation module configured to negotiate with the second terminal to determine the initiator information of the path switching procedure.

22. The apparatus according to claim 21, wherein the negotiation module is configured to send a first direct communication request to the second terminal, the first direct communication request carrying the initiator information of the path switching procedure and the initiator information of the path switching procedure indicating that the first terminal or the second terminal is the initiator of the path switching procedure; and receive a first direct communication request accept message sent by the second terminal; or
receive a second direct communication request sent by the second terminal, the second direct communication request carrying the initiator information of the path switching procedure and the initiator information of the path switching procedure indicating that the first terminal or the second terminal is the initiator of the path switching procedure, and send a second direct communication request accept message to the second terminal based on the second direct communication request.

23. The apparatus according to any one of claims 20 to 22, further comprising:
a second starting module configured to, in a case that the initiator information of the path switching procedure indicates that the second terminal is the initiator of the path switching procedure and the direct communication link quality value is detected to be less than or equal to the fourth switching threshold, start a third switching wait timer; and
a second control module configured to, in a case that a path switch request sent by the second terminal has been received, control the third switching wait timer to stop timing.

24. The apparatus according to claim 14, wherein the target information is used to indicate the relationship between the direct communication link quality value and the first switching threshold; wherein
the processing module is configured to, in a case that the direct communication link quality value is detected to be less than or equal to the first switching threshold and no path switch request sent by the second terminal has been received, initiate the path switching procedure; or
in a case that the direct communication link quality value is detected to be greater than the first switching threshold and a path switch request sent by the second terminal has been received, execute the path switching procedure initiated by the second terminal, wherein the path switch request sent by the second terminal is sent in a case that the second terminal detects that the direct communication link quality value is less than or equal to a fifth switching threshold and no path switch request sent by the first terminal has been received, the fifth switching threshold being a path switching threshold dedicated to the second terminal.

25. The apparatus according to claim 14, wherein the target information is used to indicate the first random number carried in the first path switch request and the second random number carried in the second path switch request; wherein
the processing module is configured to, in a case that the first random number is greater than or equal to the second random number, initiate the path switching procedure; or in a case that the first random number is less than the second random number, execute the path switching procedure initiated by the second terminal; or
in a case that the first random number is less than or equal to the second random number, initiate the path switching procedure; or in a case that the first random number is greater than the second random number, execute the path switching procedure initiated by the second terminal.

26. The apparatus according to claim 14, wherein the processing module is further configured to, in a case that a path switch request sent by the second terminal has been received, perform at least one of the following:
stopping the path switching procedure; and
starting a fourth switching wait timer, wherein, after the fourth switching wait timer expires, the path switching procedure is reinitiated.

27. A terminal comprising a processor and a memory, the memory storing a program or instruction executable on the processor, the program or instruction, when executed by the processor, implementing the steps of the path switching processing method according to any one of claims 1 to 13.

28. A readable storage medium, the readable storage medium storing a program or instruction, the program or instruction, when executed by a processor, implementing the steps of the path switching processing method according to any one of claims 1 to 13.
